# EUROPEAN PATENT APPLICATION

(11) **EP 4 506 142 A1**
(43) Date of publication of application: **12.02.2025**
(21) Application number: 23784672.0
(22) Date of filing: 28.03.2023
(51) Int. Cl.: B29C 55/02, C08J 5/18, B29K 23/00, B29L 9/00

(54) **STRETCHED FILM**

(30) Priority: 04.04.2022 JP 2022062636
(71) Applicant: Prime Polymer Co., Ltd., Tokyo 104-0028 (JP)
(72) Inventor: SEKIYA Keiko, Ichihara-shi, Chiba 299-0108 (JP); OGUNI Michihiko, Ichihara-shi, Chiba 299-0108 (JP)
(74) Representative: J A Kemp LLP
(86) International application number: PCT/JP2023/012449
(87) International publication number: WO 2023/195382

(57) **Abstract**

To provide a polyethylene film having well-balanced and excellent stiffness, low heat shrink property, and vertical tear strength. A stretched film having, in this order, a layer (a1) including an ethylene-based polymer (A) having a melt flow rate (190°C, 2.16 kg load) of 0.01 to 10 g/10 minutes and a density of 942 kg/m³ or higher as a main component, a layer (b) including an ethylene-based polymer (B) having a melt flow rate (190°C, 2.16 kg load) of 0.01 to 10 g/10 minutes and a density of 924 kg/m³ or lower as a main component, and a layer (a2) including an ethylene-based polymer (A) having a melt flow rate (190°C, 2.16 kg load) of 0.01 to 10 g/10 minutes and a density of 942 kg/m³ or higher as a main component.

## Description

### Technical Field

The present invention relates to a stretched film and more specifically to a stretched film of an ethylene-based polymer.

### Background Art

Recently, with a background of environmental issues, laws regarding a variety of plastic wastes have been enacted, a need of recycling packaging materials also has been increasing, and a variety of studies have been made regarding recyclable packaging materials (for example, refer to Patent Literature 1 and 2). Particularly, mono-materials composed of a single material (for example, ALL PE) have been drawing attention as recyclable packaging materials.

Films composed of a variety of resins are in use as substrates in ordinary packaging materials, and examples of characteristics necessary for ALL PE substrates include stiffness, a low heat shrink property, and strength. High-density polyethylene (HDPE) is suitable as the resin from the viewpoint of stiffness and a low heat shrink property, but there is a problem in that the vertical tear strength of HDPE is extremely weak.

In addition, multilayer polyethylene films are also conventionally known, and for example, Patent Literature 3 discloses a stretched three-layer (HDPE/LLDPE/HDPE) film having a high tear strength.

### Citation List

### Patent Literature

[Patent Literature 1] JP6716764B
[Patent Literature 2] JP2020-121455A
[Patent Literature 3] JP2008-529845A

### Summary of Invention

### Technical Problem

However, for conventional polyethylene films, there is a room for additional improvement from the viewpoint of the balance among stiffness, a low heat shrink property, and a vertical tear strength. Therefore, an object of the present invention is to provide a polyethylene film having well-balanced and excellent stiffness, low heat shrink property, and vertical tear strength.

### Solution to Problem

The present invention relates to, for example, the following [1] to [8].
[1] A stretched film comprising, in the following order:
   a layer (a1) comprising an ethylene-based polymer (A) having a melt flow rate (190°C, 2.16 kg load) of 0.01 to 10 g/10 minutes and a density of 942 kg/m³ or higher as a main component;
   a layer (b) comprising an ethylene-based polymer (B) having a melt flow rate (190°C, 2.16 kg load) of 0.01 to 10 g/10 minutes and a density of 924 kg/m³ or lower as a main component; and
   a layer (a2) comprising an ethylene-based polymer (A) having a melt flow rate (190°C, 2.16 kg load) of 0.01 to 10 g/10 minutes and a density of 942 kg/m³ or higher as a main component.
[2] The stretched film according to [1], not comprising a layer comprising a medium-density polyethylene having a density of 925 kg/m³ or higher and lower than 941 kg/m³ as a main component.
[3] The stretched film according to [1] or [2], wherein the ethylene-based polymer (B) has a density of 918 kg/m³ or lower.
[4] The stretched film according to any one of [1] to [3], having a stretch ratio of 2.0 times or more.
[5] The stretched film according to any one of [1] to [4], having a thickness of 5 µm to 1 mm.
[6] A laminate comprising a layer composed of the stretched film according to any one of [1] to [5].
[7] A package comprising a layer composed of the stretched film according to any one of [1] to [5].
[8] A method for producing a stretched film, comprising:
   a step of stretching a laminate film having, in the following order,
   a layer (a1) comprising an ethylene-based polymer (A) having a melt flow rate (190°C, 2.16 kg load) of 0.01 to 10 g/10 minutes and a density of 942 kg/m³ or higher as a main component,
   a layer (b) comprising an ethylene-based polymer (B) having a melt flow rate (190°C, 2.16 kg load) of 0.01 to 10 g/10 minutes and a density of 924 kg/m³ or lower as a main component, and
   a layer (a2) comprising an ethylene-based polymer (A) having a melt flow rate (190°C, 2.16 kg load) of 0.01 to 10 g/10 minutes and a density of 942 kg/m³ or higher as a main component.

### Advantageous Effects of Invention

The stretched film of the present invention has well-balanced and excellent stiffness, low heat shrink property, and vertical tear strength and can be preferably used as a substrate of packaging materials.

### Description of Embodiments

Hereafter, the present invention will be described in more detail.

### [Stretched film]

A stretched film according to the present invention includes:
a layer (a1) including an ethylene-based polymer (A) as a main component,
a layer (b) including an ethylene-based polymer (B) as a main component, and
a layer (a2) including an ethylene-based polymer (A) as a main component, in this order.

The ethylene-based polymer (A) that is contained in the layer (a2) may be the same as or different from the ethylene-based polymer (A) that is contained in the layer (a1).

### <Layer (a1) and layer (a2)>

The layer (a1) and the layer (a2) are each independently a layer containing an ethylene-based polymer (A) as a main component.

The melt flow rate (190°C, 2.16 kg load) of the ethylene-based polymer (A) is 0.01 to 10 g/10 minutes, preferably 0.01 to 6 g/10 minutes, more preferably 0.05 to 6 g/10 minutes and further preferably 0.07 to 4 g/10 minutes.

When the melt flow rate of the ethylene-based polymer (A) is the above-described lower limit value or higher, the formability is excellent, and when the melt flow rate is the above-described upper limit value or lower, the stretchability is excellent.

The density of the ethylene-based polymer (A) is 942 kg/m³ or higher, preferably 944 kg/m³ or higher, more preferably 945 kg/m³ or higher and further preferably 948 kg/m³ or higher.

When the density is the above-described lower limit value or higher, the stiffness and the heat resistance are excellent, and when the density is the above-described upper limit value or lower, the stiffness and the heat resistance are poor.

The ethylene-based polymer (A) may be an ethylene homopolymer or an ethylene-based copolymer of ethylene and another monomer.

The ethylene-based copolymer is particularly preferably a copolymer of ethylene and an α-olefin having 3 or more carbon atoms (ethylene-α-olefin copolymer). Examples of the α-olefin include propylene, 1-butene, 4-methyl-1-pentene, 1-hexene and 1-octene, and preferable examples thereof include propylene, 1-butene and 1-hexene.

A method for producing the ethylene-based polymer (A) is not particularly limited.

The ethylene-based polymer (A) may be a mixture of two or more ethylene-based polymers. In this case, the above-described melt flow rate and density each mean the melt flow rate and density of the mixture.

The ethylene-based polymer (A) and an ethylene-based polymer (B) to be described below each may include a constituent unit derived from one or more biomass-derived monomers (ethylene or an α-olefin having three or more carbon atoms). Monomers of the same kind that constitute the polymer may be only biomass-derived monomers, may be only fossil fuel-derived monomers or may be both a biomass-derived monomer and a fossil fuel-derived monomer. The biomass-derived monomer refers to a monomer composed of any renewable natural raw material that contains fungi, yeast, algae and bacteria and is derived from a plant or an animal, and a residue thereof, contains a ¹⁴C isotope as carbon in a proportion of approximately 1 × 10⁻¹² and has a biomass carbon concentration (pMC) measured in accordance with ASTM D6866 of approximately 100 (pMC). The biomass-derived monomer (ethylene) can be obtained by, for example, a conventionally known method.

It is preferable from the viewpoint of reducing an environmental impact that a polyethylene-based polymer include a constituent unit derived from a biomass-derived monomer. As long as polymer production conditions such as a catalyst for polymerization and the polymerization temperature are equal, the raw material olefin may contain a biomass-derived olefin, and the molecular structure may be equal to that of the polyethylene-based polymer composed of a fossil fuel-derived monomer except that the ¹⁴C isotope is contained in a proportion of approximately 1 × 10⁻¹². Therefore, it is considered that these performances do not change.

The ethylene-based polymer (A) and the ethylene-based polymer (B) to be described below may contain a chemical recycling-derived monomer (ethylene or an α-olefin having three or more carbon atoms). The monomer that constitutes the polymer may be only a chemical recycling-derived monomer or may contain a chemical recycling-derived monomer and a fossil fuel-derived monomer and/or biomass-derived monomer. The chemical recycling-derived monomer can be obtained by, for example, a conventionally known method.

The polyethylene-based polymer preferably contains the chemical recycling-derived monomer from the viewpoint of reducing an environmental impact (mainly waste reduction). Even when the raw material monomer may contain the chemical recycling-derived monomer, since the chemical recycling-derived monomer is a monomer obtained by restoring a polymer such as waste plastic up to the monomer unit such as ethylene by depolymerization or thermal decomposition or a monomer produced using the above-described monomer as a raw material, the molecular structure is thus the same as that of the polyethylene-based polymer composed of a fossil fuel-derived monomer as long as polymer production conditions such as a catalyst for polymerization, the polymerization process, and the polymerization temperature are the same. Therefore, it is considered that these performances do not change.

Examples of a component other than the ethylene-based polymer (A), which is the main component, that the layer (a1) and the layer (a2) can contain include a variety of additives for ordinary polyolefin-based resin compositions that are added as necessary to an extent that the effect of the present invention is not impaired, for example, at least one of a weathering stabilizer, a heat stabilizer, an antistatic agent, an antifogging agent, an anti-blocking agent, a slip agent, a lubricant, a pigment, a droplet agent, and a nucleating agent.

In a case where the layer (a1) or the layer (a2) contains the component other than the ethylene-based polymer (A), the content of the ethylene-based polymer (A) in the layer (a1) or the layer (a2) needs to be more than 50 mass% and is, for example, 90 mass% or more, 95 mass% or more, 99 mass% or more or 99.9 mass% or more.

### <Layer (b)>

The layer (b) is a layer containing an ethylene-based polymer (B) as a main component.

The melt flow rate (190°C, 2.16 kg load) of the ethylene-based polymer (B) is 0.01 to 10 g/10 minutes, preferably 0.1 to 10 g/10 minutes and more preferably 0.71 to 10 g/10 minutes.

When the melt flow rate of the ethylene-based polymer (B) is the above-described lower limit value or higher, the extrudability is excellent, and when the melt flow rate is the above-described upper limit value or lower, the stretchability is excellent.

The density of the ethylene-based polymer (B) is 924 kg/m³ or lower.

The density of the ethylene-based polymer (B) in one aspect of the present invention is, for example, 880 kg/m³ or higher and 924 kg/m³ or lower, preferably 880 kg/m³ or higher and 920 kg/m³ or lower, more preferably 890 kg/m³ or higher and 918 kg/m³ or lower and further preferably 890 kg/m³ or higher and 915 kg/m³ or lower.

In addition, the density of the ethylene-based polymer (B) in another aspect of the present invention is, for example, 913 kg/m³ or lower, preferably 912 kg/m³ or lower and more preferably 880 to 911 kg/m³.

In the stretched film of the present invention, since the density of the ethylene-based polymer (B) is the above-described upper limit value or lower and the density of the ethylene-based polymer (A) is the above-described lower limit value or higher, that is, the density differences between the layer (a1) and the layer (b) and between the layer (a2) and the layer (b), which are disposed in the order of the layer (a1)/the layer (b)/the layer (a2), are large, it is considered that orientation of the ethylene-based polymer (B) in the layer (b) during stretching is inhibited, which makes it possible to inhibit the heat shrinkage of the stretched film of the present invention.

In addition, when the density of the ethylene-based polymer (B) is the lower limit value or higher, it is possible to maintain the stiffness.

The ethylene-based polymer (B) may be an ethylene homopolymer or a copolymer of ethylene and a different monomer (ethylene-based copolymer).

The ethylene-based copolymer is particularly preferably a copolymer of ethylene and an α-olefin having 3 or more carbon atoms (ethylene-α-olefin copolymer). Examples of the α-olefin include propylene, 1-butene, 4-methyl-1-pentene, 1-hexene and 1-octene, and preferable examples thereof include 1-butene, 1-hexene and 1-octene.

A method for producing the ethylene-based polymer (B) is not particularly limited.

The ethylene-based polymer (B) may be a mixture of two or more ethylene-based polymers. In this case, the above-described melt flow rate and density each mean the melt flow rate and density of the mixture.

As a component other than the ethylene-based polymer (B), which is the main component, that the layer (b) can contain, a variety of additives for ordinary polyolefin-based resin compositions that are added as necessary to an extent that the effect of the present invention is not impaired, for example, at least one of a weathering stabilizer, a heat stabilizer, an antistatic agent, an antifogging agent, an anti-blocking agent, a slip agent, a lubricant, a pigment, a droplet agent, and a nucleating agent may also be contained.

In a case where the layer (b) contains the component other than the ethylene-based polymer (B), the content of the ethylene-based polymer (B) in the layer (b) needs to be more than 50 mass% and is, for example, 90 mass% or more, 95 mass% or more, 99 mass% or more or 99.9 mass% or more.

### <Stretched film>

The stretched film of the present invention is a film in which the layer (a1), the layer (b) and the layer (a2) are laminated in this order.

A different layer, for example, an adhesive layer, may be interposed between the layer (a1) and the layer (b) or between the layer (a1) and the layer (b) to an extent that the effect of the present invention is not impaired, but it is preferable that the layer (a1) and the layer (b) are adjacent to each other and the layer (b) and the layer (a2) are adjacent to each other from the viewpoint of making the stretched film a mono-material.

The stretched film of the present invention preferably does not have a layer (b') having a density difference of 20 kg/m³ or less from the ethylene-based polymer (A) that constitutes the layer (a1) and the layer (a2).

In addition, it is also preferable that the stretched film of the present invention does not have a layer (b'') including a medium-density polyethylene having a density of 925 kg/m³ or higher and lower than 941 kg/m³, preferably a density of 925 kg/m³ or higher and lower than 945 kg/m³, as a main component (the content needs to be more than 50 mass% and is, for example, 90 mass% or more, 95 mass% or more, 99 mass% or more or 99.9 mass% or more).

Examples of the layer (b'') include a layer composed only of a medium-density polyethylene having a density of 925 kg/m³ or higher and lower than 945 kg/m³ and a layer composed of the medium-density polyethylene and a variety of additives for ordinary polyolefin-based resin compositions, for example, at least one of a weathering stabilizer, a heat stabilizer, an antistatic agent, an antifogging agent, an anti-blocking agent, a slip agent, a lubricant, a pigment, a droplet agent, and a nucleating agent.

The range of the layer (b') and the range of the layer (b") can overlap each other.

The stretched film of the present invention not having the layer (b') and the stretched film not having the layer (b'') are excellent in terms of a low heat shrink property.

The stretched film of the present invention may be any of a uniaxially stretched film or a biaxially stretched film, and is preferably a uniaxially stretched film from the viewpoint of the production device cost.

The stretch ratio (the thickness of a laminated film before stretching (stretched original roll)/the thickness of the stretched film of the present invention) of the stretched film of the present invention is preferably 2.0 times or more, more preferably 2.5 times or more and further preferably 3.0 times or more. The upper limit of the stretch ratio is not particularly limited and may be, for example, 60 times or less or 50 times or less. When the stretch ratio is within the above-described range, stiffness and a strength can be obtained.

A laminate imparted with a variety of functions can be obtained by laminating the stretched film of the present invention together with a different film or layer. The laminate may be produced by co-extruding a laminate film to be stretched together with a barrier resin (for example, EVOH or Ny) or an adhesive resin (for example, ADMER (registered trademark) (manufactured by Mitsui Chemicals, Inc.) or by coating the surface of the stretched film (with, for example, a vapor deposited film). The vapor deposited film may be composed of a metal or may be composed of a metal oxide.

Examples of the metal that constitutes a metal vapor deposited film include aluminum, chromium, tin, nickel, copper, silver, gold, and platinum.

In addition, examples of the metal oxide include aluminum oxide, silicon oxide, magnesium oxide, calcium oxide, zirconium oxide, titanium oxide, boron oxide, hafnium oxide, and barium oxide.

The thickness of the stretched film of the present invention needs to be set as appropriate depending on a variety of uses; however, ordinarily, the lower limit is preferably 5 µm or more and more preferably 6 µm or more, and the upper limit is preferably 1 mm or less and more preferably 200 µm or less. When the thickness of the stretched film is within the above-described range, stiffness and strength as a packaging material can be balanced.

In addition, the ratio of the thicknesses of the individual layers (the thickness of the layer (a1):the thickness of the layer (b):the thickness of the layer (a2)) is ordinarily 0.02 to 50:1:0.02 to 50 and preferably 0.05 to 20:1:0.05 to 20. When the ratio of the thicknesses of the individual layers is within the above-described range, the balance among stiffness, strength and heat resistance becomes favorable.

A method for producing the stretched film of the present invention is not particularly limited, and examples thereof include a method for stretching a laminate film (stretched original roll) having the layer (a1), the layer (b) and the layer (a2) in this order.

A method for producing the laminate film (stretched original roll) is not particularly limited, and examples thereof include a coextrusion forming method.

Examples of a method for stretching a stretched original roll include a method of biaxial stretching in the longitudinal and width directions simultaneously or sequentially by a tenter method, a method of biaxial stretching in the longitudinal and width directions simultaneously by a tubular method, and a method of uniaxial stretching in a flow direction of a film by utilizing a difference between ratios of the rotational speeds of two or more rolls.

In the uniaxial stretching, the stretched original roll is preferably brought out with a roll stretching machine, preheated with a preheating roll and then uniaxially stretched in an MD direction (take-up direction). From the viewpoint of increasing the production efficiency, the stretched original roll is preferably preheated and then immediately stretched uniaxially in the MD direction. The uniaxial stretching in the present invention means stretching in a uniaxial direction, but the stretched original roll may be stretched in a different direction from the uniaxial direction to an extent the effect of the present invention is not impaired. This is because, even when an attempt is made to uniaxially stretch the stretched original roll, there are cases where the stretched original roll is substantially stretched in a different direction from the uniaxial direction depending on a stretching facility to be used.

An annealing treatment may be performed as necessary on the stretched film after the stretching. The annealing treatment can be performed by bringing a stretched sheet into contact with a heating roll.

The average density of the stretched film of the present invention is preferably 920 to 950 kg/m³ and more preferably 925 to 940 kg/m³ from the viewpoint of the strength.

The elastic modulus, which is measured by a method employed in Examples to be described below, of the stretched film of the present invention is preferably 2000 MPa or more and more preferably 2500 MPa or more. The upper limit of the elastic modulus may be, for example, 7000 MPa.

The Elmendorf tear strength, which is measured by a method employed in the Examples to be described below, of the stretched film of the present invention is preferably 0.2 N or higher and more preferably 0.3 N or higher. The upper limit of the Elmendorf tear strength may be, for example, 10 N.

The heat shrinkage rate, which is measured by a method employed in the Examples to be described below, of the stretched film of the present invention is preferably 30% or less and more preferably 20% or less. The lower limit of the heat shrinkage rate may be, for example, 0%.

### [Laminate]

A laminate of the present invention includes a layer composed of the above-described stretched film of the present invention. The laminate of the present invention may be an aspect in which a plurality of layers composed of the stretched film of the present invention are provided. The above-described stretched film of the present invention is preferably used as a substrate in the laminate. Another layer in the laminate of the present invention can be employed as appropriate depending on the use.

The laminate of the present invention can be produced by a known method, and examples thereof include methods such as coextrusion forming of one or two or more thermoplastic resins, extrusion lamination, dry lamination, and thermal lamination.

### [Package]

A package of the present invention includes a layer composed of the above-described stretched film of the present invention. For example, the package can be obtained by using the above-described laminate of the present invention as a bag-like container, filling the laminate with items to be packaged (contents) in a variety of uses and heat-sealing the laminate.

### Examples

Hereinafter, the present invention will be described in greater detail by way of Examples, but the present invention is in no way limited by these Examples.

### [Measurement methods]

In the following Examples, the physical properties of raw materials or films were measured as follows.

### <Melt flow rate (MFR: [g/10 minutes])>

The melt flow rate was measured under conditions of 190°C and 2.16 kg load (kgf) in accordance with JIS K7210.

### <Density [kg/m³]>

The density was measured using a strand that was obtained during the measurement of the melt index in accordance with JIS K7112.

### <Elastic modulus>

A dumbbell having a size in accordance with JIS K6781 was blanked from the film in a take-up direction (MD) of a film and used as a specimen. The specimen was set up in air chucks of a universal tester such that MD was in a pulling direction and subjected to a tensile test with a chuck distance set to 80 mm and a pulling rate set to 200 mm/min. The slope of the initial stress to the displacement was taken as the elastic modulus.

### <Tear strength>

A cut was made on the specimen in the take-up direction (MD) of the film, and the Elmendorf tear strength was measured in accordance with JIS K7128-2 using an Elmendorf tear tester of Toyo Seiki Seisaku-sho, Ltd.

### <Heat shrinkage rate>

The film was cut into a strip shape that was 10 mm in width and 100 mm in length. The longitudinal direction was in the take-up direction (MD). The cut film was put into an air oven heated to 120°C and heated for 15 minutes, and the length (in the longitudinal direction) of the film was measured. The heat shrinkage rate was calculated as follows. Heat shrinkage rate [%] = (100 mm - length (mm) of film after heating)/100 mm × 100

### [Raw materials]

The following raw materials were used in the Examples.
· 3300F: Ethylene-based polymer (trade name: HI-ZEX (registered trademark) 3300F (manufactured by Prime Polymer Co., Ltd.), MFR: 1.1 g/10 minutes, density: 949 kg/m³)
· 3600F: Ethylene-based polymer (trade name: HI-ZEX (registered trademark) 3600F (manufactured by Prime Polymer Co., Ltd.), MFR: 1.0 g/10 minutes, density: 958 kg/m³)
· GE100: Ethylene-based polymer (trade name: HI-ZEX (registered trademark) GE100 (manufactured by Prime Polymer Co., Ltd.), MFR: 0.09 g/10 minutes, density: 954 kg/m³)
· SP0510: Ethylene-based polymer (trade name: EVOLUE (registered trademark) SP0510 (manufactured by Prime Polymer Co., Ltd.), MFR: 1.3 g/10 minutes, density: 904 kg/m³)
· SP0820: Ethylene-based polymer (trade name: EVOLUE (registered trademark) SP0820 (manufactured by Prime Polymer Co., Ltd.), MFR: 1.8 g/10 minutes, density: 910 kg/m³)
· SP1510: Ethylene-based polymer (trade name: EVOLUE (registered trademark) SP1510 (manufactured by Prime Polymer Co., Ltd.), MFR: 0.95 g/10 minutes, density: 915 kg/m³)
· SP3010: Ethylene-based polymer (trade name: EVOLUE (registered trademark) SP3010 (manufactured by Prime Polymer Co., Ltd.), MFR: 0.75 g/10 minutes, density: 926 kg/m³)
· SP3210: Ethylene-based polymer (trade name: EVOLUE (registered trademark) SP3210 (manufactured by Prime Polymer Co., Ltd.), MFR: 0.6 g/10 minutes, density: 929 kg/m³)

### [Production Example 1]

3300F and SP0510 were melt-kneaded in a ratio of 50 mass% and 50 mass% with an extruder at 200°C to obtain an ethylene-based polymer composition (hereinafter, referred to as "composition c3").

### [Example 1]

### (Production of non-stretched film)

Coextrusion forming was performed on a layer constitution shown in Table 1 under the following forming conditions, thereby obtaining a non-stretched film having a thickness of 125 µm.

### <Film forming conditions>

Forming machine: Three-layer inflation film forming machine manufactured by ALPINE
Die diameter: 225 mmϕ
Forming temperature: 200°C
Die lip gap: 4.0 mm
Extrusion amount: 100 kg/h
Take-up rate: 8.7 m/minute
(Production of stretched film)

The obtained non-stretched film was uniaxially stretched with a heating roll in a flow direction (MD) at a stretch ratio of five times at a stretching temperature shown in Table 1 to obtain a uniaxially stretched film having a thickness of 25 µm. The elastic modulus, tear strength and heat shrinkage rate of the obtained stretched film were obtained. The measurement results are shown in Table 1.

### [Examples 2 to 4 and Comparative Examples 1 and 2]

Uniaxially stretched films having a thickness of 25 µm were obtained in the same manner as in Example 1 except that the layer constitution was changed as shown in Table 1. The measurement results are shown in Table 1.

### [Comparative Example 3]

The composition c3 obtained in Production Example 1 was melt-kneaded with an extruder at 200°C and then formed with an inflation forming machine into a non-stretched film having a thickness of 125 µm.

A uniaxially stretched film having a thickness of 25 µm was obtained from the obtained non-stretched film by the same method as in "(production of stretched film)" of Example 1. The measurement results are shown in Table 1.

### [Comparative Examples 4 and 5]

Uniaxially stretched films having a thickness of 25 µm were obtained in the same manner as in Comparative Example 3 except that the composition c3 was changed as shown in Table 1. The measurement results are shown in Table 1.

### [Comparative Example 6]

As the ethylene-based polymer, "3300F" was melt-kneaded with an extruder at 200°C and then formed with an inflation forming machine into a non-stretched film having a thickness of 40 µm. The measurement results are shown in Table 1.

**Table 1**

| | | | Unit | Example 1 | Example 2 | Example 3 | Example 4 | Comparative Example 1 |
|---|---|---|---|---|---|---|---|---|
| Stretching | | | | Stretched | Stretched | Stretched | Stretched | Stretched |
| Stretch ratio | | | | 5 Times | 5 Times | 5 Times | 5 Times | 5 Times |
| Layer | | | | Multilayer | Multilayer | Multilayer | Multilayer | Multilayer |
| Surface layer | Raw material | | - | 3600F | GE100 | 3600F | 3600F | 3300F |
| | MFR | | g/10 min | 1.0 | 0.10 | 1.0 | 1.0 | 1.1 |
| | Density | | kg/m³ | 958 | 954 | 958 | 958 | 949 |
| Interlayer | Raw material | | - | SP0510 | SP0510 | SP0820 | SP1510 | SP3010 |
| | MFR | | g/10 min | 1.3 | 1.3 | 1.7 | 0.95 | 0.75 |
| | Density | | kg/m³ | 904 | 904 | 910 | 917 | 926 |
| Surface layer | Raw material | | - | 3600F | GE100 | 3600F | 3600F | 3300F |
| | MFR | | g/10 min | 1.0 | 0.09 | 1.0 | 1.0 | 1.1 |
| | Density | | kg/m³ | 958 | 954 | 958 | 958 | 949 |
| Ratio of thicknesses of layers | | | - | 1/1/1 | 1/1/1 | 1/1/1 | 1/1/1 | 1/2/1 |
| Average density of film | | | kg/m³ | 939 | 936 | 941 | 944 | 938 |
| Stretching temperature | | | °C | 115 | 115 | 115 | 115 | 100 |
| Physical properties of film | Film thickness | | µm | 25 | 25 | 25 | 25 | 25 |
| | Elastic modulus (MD) | | MPa | 3114 | 3545 | 3774 | 3532 | 2658 |
| | Tear strength (MD) | | N | 0.7 | 7.7 | 0.8 | 1.6 | 0.5 |
| | Heat shrinkage rate (MD, 120°C) | | g | 8.9 | 16 | 9.6 | 9.6 | 39 |

| | | | | | | | | |
|---|---|---|---|---|---|---|---|---|
| (*) Composition c3: 3300F_50 mass% + SP0510_50 mass% | | | | | | | | |

**Table 1 (continued)**

| | | | Unit | Comparative Example 2 | Comparative Example 3 | Comparative Example 4 | Comparative Example 5 | Comparative Example 6 |
|---|---|---|---|---|---|---|---|---|
| Stretching | | | | Stretched | Stretched | Stretched | Stretched | Not stretched |
| Stretch ratio | | | | 5 Times | 5 Times | 5 Times | 5 Times | |
| Layer | | | | Multilayer | Single layer | Single layer | Single layer | Single layer |
| Surface layer | Raw material | | - | 3600F | Composition c3^{(*)} | 3300F | SP3010 | 3300F |
| | MFR | | g/10 min | 1.0 | 1.1 | 1.1 | 0.75 | 1.1 |
| | Density | | kg/m³ | 958 | 938 | 950 | 926 | 950 |
| Interlayer | Raw material | | - | SP0510 | | | | |
| | MFR | | g/10 min | 1.3 | | | | |
| | Density | | kg/m³ | 904 | | | | |
| Surface layer | Raw material | | - | SP3210 | | | | |
| | MFR | | g/10 min | 0.6 | | | | |
| | Density | | kg/m³ | 929 | | | | |
| Ratio of thicknesses of layers | | | - | 1/1/1 | | | | |
| Average density of film | | | kg/m³ | 930 | | | | |
| Stretching temperature | | | °C | 118 | 80 | 115 | 90 | |
| Physical properties of film | Film thickness | | µm | 25 | 25 | 25 | 25 | 40 |
| | Elastic modulus (MD) | | MPa | 2165 | 1739 | 3330 | 920 | 1235 |
| | Tear strength (MD) | | N | 0.3 | 1.6 | 0.1 | 0.2 | 0.2 |
| | Heat shrinkage rate (MD, 120°C) | | g | 52 | 57 | 11 | 42 | - |

| | | | | | | | | |
|---|---|---|---|---|---|---|---|---|
| (*) Composition c3: 3300F_50 mass% + SP0510_50 mass% | | | | | | | | |

## Claims

1. A stretched film comprising, in the following order:
a layer (a1) comprising an ethylene-based polymer (A) having a melt flow rate (190°C, 2.16 kg load) of 0.01 to 10 g/10 minutes and a density of 942 kg/m³ or higher as a main component;
a layer (b) comprising an ethylene-based polymer (B) having a melt flow rate (190°C, 2.16 kg load) of 0.01 to 10 g/10 minutes and a density of 924 kg/m³ or lower as a main component; and
a layer (a2) comprising an ethylene-based polymer (A) having a melt flow rate (190°C, 2.16 kg load) of 0.01 to 10 g/10 minutes and a density of 942 kg/m³ or higher as a main component.

2. The stretched film according to claim 1, not comprising a layer comprising a medium-density polyethylene having a density of 925 kg/m³ or higher and lower than 941 kg/m³ as a main component.

3. The stretched film according to claim 1, wherein the ethylene-based polymer (B) has a density of 918 kg/m³ or lower.

4. The stretched film according to claim 1, having a stretch ratio of 2.0 times or more.

5. The stretched film according to claim 1, having a thickness of 5 µm to 1 mm.

6. A laminate comprising a layer composed of the stretched film according to any one of claims 1 to 5.

7. A package comprising a layer composed of the stretched film according to any one of claims 1 to 5.

8. A method for producing a stretched film, comprising:
a step of stretching a laminate film having, in the following order,
a layer (a1) comprising an ethylene-based polymer (A) having a melt flow rate (190°C, 2.16 kg load) of 0.01 to 10 g/10 minutes and a density of 942 kg/m³ or higher as a main component,
a layer (b) comprising an ethylene-based polymer (B) having a melt flow rate (190°C, 2.16 kg load) of 0.01 to 10 g/10 minutes and a density of 924 kg/m³ or lower as a main component; and
a layer (a2) comprising an ethylene-based polymer (A) having a melt flow rate (190°C, 2.16 kg load) of 0.01 to 10 g/10 minutes and a density of 942 kg/m³ or higher as a main component.
